(19) Europäisches Patentamt
European Patent Office
Office européen des brevets

(11) **EP 3 883 254 A1**

(12) **EUROPEAN PATENT APPLICATION**
published in accordance with Art. 153(4) EPC

(43) Date of publication:
**22.09.2021 Bulletin 2021/38**

(21) Application number: **18940555.8**

(22) Date of filing: **06.12.2018**

(51) Int Cl.:
***H04N 21/43*** *(2011.01)*

(86) International application number:
**PCT/CN2018/119596**

(87) International publication number:
**WO 2020/103203 (28.05.2020 Gazette 2020/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.11.2018 CN 201811375089**

(71) Applicant: **Wangsu Science & Technology Co., Ltd.**
**Shanghai 201800 (CN)**

(72) Inventor: **LIN, Xinjian**
**Shanghai 201800 (CN)**

(74) Representative: **De Arpe Tejero, Manuel**
**Arpe Patentes y Marcas**
**Alcalá, 26, 5ª Planta**
**28014 Madrid (ES)**

(54) **METHOD AND APPARATUS FOR SYNCHRONIZING WHITEBOARD WITH VIDEO, COMPUTING DEVICE, AND STORAGE MEDIUM**

(57) The present disclosure describes a whiteboard and video synchronization method, apparatus, computing device and storage medium. The method includes that: a first terminal device acquires a video stream sent by a server, where each frame of video data in the video stream is provided with a timestamp, and the video stream is sent to the server by a second terminal device after the second terminal device collects each frame of video data and adds a timestamp to each frame of video data; the first terminal device then plays the video stream, and based on the timestamp of a currently played frame of the video stream, acquires a whiteboard content corresponding to the timestamp of the currently played frame of the video stream, from the cache for synchronous play. Since the timestamp is used for synchronization purpose, during the display, the whiteboard content and the current frame of video data that have the same timestamp are to be displayed synchronously. This may solve the problem of the network instability-caused dyssynchronization between the whiteboard content and video data in the existing technologies.

First Terminal Device 100 | Second Terminal Device 200 | Server 300

Collect first whiteboard content, and add timestamp to first whiteboard content, collect each frame of video data and add timestamp to each frame of video data 201

Send first whiteboard content, timestamp of first whiteboard content, each frame of video data and timestamp of each frame of video data 202

Send video stream 203

Play video stream, according to timestamp of currently played frame of video data, acquire Whiteboard content corresponding to timestamp of currently played frame of video stream, from cache for display synchronization 204

**FIG. 2**

**Description**

FIELD OF DISCLOSURE

The present disclosure generally relates to the field of streaming media, more particularly, relates to a whiteboard and video synchronization method, apparatus, computing device and storage medium.

BACKGROUND

In recent years, with the rapid growth of Internet users and the continuous support of the national education policy, the online education industry has developed rapidly. China's online education has gone through three stages from the distance education platform and training institutions to the current Internet companies. The Internet has brought about significant changes in education. This change is not only reflected in the breakthrough of time and space, but also in the teaching, learning, evaluation, and measurement of education.

With the rapid development of the online education industry, whiteboard interaction services on the network platform have emerged. The whiteboard interaction services may not only publish and share teachers' lectures to students, but the students can also interact with others on shared documents. The teachers may video-broadcast lectures live and remotely, and synchronously display the content on the whiteboard for the students to watch. The students may watch the video images and the whiteboard's synchronous lecture content of a remote teacher's live lecture.

However, due to the diversity of the stream-pushing terminals, especially the mobile stream-pushing terminals that are vulnerable to network instability, the stream-pushing process may be unstable, and thus the live video images of a remote teacher and the lecture content displayed on the whiteboard may very likely be out of sync. For instance, a teacher's live video has already proceeded to the second section of the course materials while the whiteboard content still remains in the first section of the course materials. This and other similar problems may affect the teacher-student interaction of remote online education, and thus affect the online education experience.

BRIEF SUMMARY OF THE DISCLOSURE

Embodiments of the present disclosure provide a whiteboard and video synchronization method, apparatus, computing device and storage medium, which aim to solve the problem of the network instability-caused dyssynchronization between the whiteboard content and video data in the existing technologies.

Embodiments of the present disclosure provide a whiteboard and video synchronization method, which includes:

acquiring, by a first terminal device, a video stream sent by a server, where each frame of video data in the video stream has a timestamp, and the video stream is sent to the server by a second terminal device after the second terminal device collects each frame of video data and adds a timestamp to each frame of video data; and
playing the video stream by the first terminal device, and according to a timestamp of a currently played frame of the video stream, acquiring, by the first terminal device, a whiteboard content corresponding to the timestamp of the currently played frame of the video stream, from a cache for synchronous display.

In the technical solution provided above, since the timestamp is used for synchronization purpose, during the display, the whiteboard content and the current frame of video data that have the same timestamp are to be displayed synchronously. This may solve the problem of the network instability-caused dyssynchronization between the whiteboard content and video data in the existing technologies.

Optionally, before acquiring, by the first terminal device, the video stream sent by the server, the method further includes:

acquiring, by the first terminal device, the whiteboard content sent by the server, and caching, by the first terminal device, the whiteboard content, where the whiteboard content includes a timestamp, and is a first whiteboard content that is collected by the second terminal device and is added with the timestamp and sent to the server by the second terminal device.

In the technical solution provided above, through caching the whiteboard content and the timestamp in advance, the whiteboard content that has the same timestamp may be provided when the video stream is played, so that the whiteboard and video data synchronization may be achieved.

Optionally, playing the video stream by the first terminal device, and according to the timestamp of the currently played frame of the video stream, acquiring, by the first terminal device, the whiteboard content corresponding to the timestamp of the currently played frame of the video stream, from the cache for synchronous display includes:

playing, by the first terminal device, the video stream, rounding down current playing time of the currently played frame of the video stream to determine a first timepoint, and searching for the timestamp of the currently played frame in a cached queue according to the first timepoint; and

according to the timestamp of the currently played frame, acquiring, by the first terminal device, the whiteboard content corresponding to the timestamp of the currently played frame, from the cache for synchronous display.

In the technical solution provided above, through establishing a correspondence between the video playing time and the timestamp of each frame of video data, the timestamp corresponding to the current frame of the video stream may be quickly searched.

Optionally, the method further includes:

decoding, by the first terminal device, the video stream and determining playing time of each frame of video data; and rounding down, by the first terminal device, the playing time of each frame of video data to determine a second timepoint of each frame of video data, and using the second timepoint as an index to place the timestamp of each frame of video data in the cached queue.

Optionally, acquiring, by the first terminal device according to the timestamp of the currently played frame of the video stream, the whiteboard content corresponding to the timestamp of the currently played frame of the video stream, from the cache for synchronous display includes:

determining, by the first terminal device, whether a difference between the timestamp of the currently played frame of the video stream and a timestamp of the cached whiteboard content is less than a first threshold; and if the difference is less than the first threshold, synchronously displaying, by the first terminal device, the whiteboard content with the timestamp difference less than the first threshold.

In the technical solution provided above, the timestamp of the current frame and the timestamp of the cached whiteboard content are compared. Since the difference between the two timestamps is set to be less than the first threshold, the synchronization effect may be further improved.

Optionally, a timestamp described above is a UTC (Coordinated Universal Time) timestamp.

Correspondingly, embodiments of the present disclosure further provide a whiteboard and video synchronization method, which includes:

collecting, by a second terminal device, a first whiteboard content and adding a timestamp to the first whiteboard content; collecting, by the second terminal device, each frame of video data and adding a timestamp to each frame of video data; and sending, by the second terminal device, the first whiteboard content, the timestamp of the first whiteboard content, each frame of video data, and the timestamp of each frame of video data to a server.

Optionally, after sending, by the second terminal device, the first whiteboard content, the timestamp of the first whiteboard content, each frame of video data, and the timestamp of each frame of video data to the server, the method further includes:
playing, by the second terminal device, each frame of video data, and determining the first whiteboard content synchronously displayed with each frame of video data according to the timestamp of each frame of video data and the timestamp of the first whiteboard content.

Optionally, a timestamp described above is a UTC timestamp.

Correspondingly, embodiments of the present disclosure further provide an apparatus for whiteboard and video synchronization, which includes:

an acquisition module that is configured to acquire a video stream sent by a server, where each frame of video data in the video stream has a timestamp, and the video stream is sent to the server by a second terminal device after the second terminal device collects each frame of video data and adds a timestamp to each frame of video data; and a streaming module that is configured to play the video stream, and according to a timestamp of a currently played frame of the video stream, acquire, a whiteboard content corresponding to the timestamp of the currently played frame of the video stream, from a cache for synchronous display.

Optionally, the acquisition module is further configured to:
before acquiring the video stream sent by the server, acquire the whiteboard content sent by the server, and cache the whiteboard content, where the whiteboard content includes a timestamp, and is a first whiteboard content that is collected by the second terminal device and is added with the timestamp and sent to the server by the second terminal device.

Optionally, the streaming module is specifically configured to:

play the video stream, round down current playing time of the currently played frame of the video stream to determine a first timepoint, and search for the timestamp of the currently played frame in a cached queue according to the first timepoint; and
according to the timestamp of the currently played frame, acquire, the whiteboard content corresponding to the timestamp of the currently played frame, from the cache for synchronous display.

Optionally, the streaming module is further configured to:

decode the video stream and determine playing time of each frame of video data before playing the video stream; and round down the playing time of each frame of video data to determine a second timepoint of each frame of video data, and use the second timepoint as an index to place the timestamp of each frame of video data into the cached queue.

Optionally, the streaming module is further configured to:

determine whether a difference between the timestamp of the currently played frame of the video stream and a timestamp of the cached whiteboard content is less than a first threshold; and
if the difference is less than the first threshold, synchronously display the whiteboard content with the timestamp difference less than the first threshold.

Optionally, a timestamp described above is a UTC timestamp.

Correspondingly, embodiments of the present disclosure further provide an apparatus for whiteboard and video synchronization, which includes:

a collection module that is configured to collect a first whiteboard content and add a timestamp to the first whiteboard content, and collect each frame of video data and add a timestamp to each frame of video data; and
a transmission module that is configured to send the first whiteboard content, the timestamp of the first whiteboard content, each frame of video data, and the timestamp of each frame of video data to a server.

Optionally, the apparatus further includes a streaming module; and

the streaming module is specifically configured to:
after sending the first whiteboard content, the timestamp of the first whiteboard content, each frame of video data, and the timestamp of each frame of video data to the server, play each frame of video data, and determine a first whiteboard content synchronously displayed with each frame of video data according to the timestamp of each frame of video data and the timestamp of the first whiteboard content.

Optionally, a timestamp described above is a UTC timestamp.

Correspondingly, embodiments of the present disclosure further provide a computing device, which includes:

a memory for storing programs and instructions; and
a processor that is configured to call the programs and instructions stored in the memory and implement the foregoing whiteboard and video synchronization methods based on the acquired programs and instructions.

Correspondingly, embodiments of the present disclosure further provide a computer-readable storage medium comprising computer-readable instructions that, when read and executed by a computer, cause the computer to implement the foregoing whiteboard and video synchronization methods.

BRIEF DESCRIPTION OF THE DRAWINGS

To make the technical solutions in the embodiments of the present disclosure clearer, a brief introduction of the accompanying drawings consistent with descriptions of the embodiments will be provided hereinafter. It is to be understood that the following described drawings are merely some embodiments of the present disclosure. Based on the accompanying drawings and without creative efforts, persons of ordinary skill in the art may derive other drawings.

FIG. 1 is a schematic structural diagram of a system architecture according to one embodiment of the present disclosure;

FIG. 2 is a flowchart of a whiteboard and video synchronization method according to one embodiment of the present disclosure;

FIG. 3 is a schematic diagram of a page displayed on a second terminal device according to one embodiment of the present disclosure;

FIG. 4 is a flowchart of a synchronous display of whiteboard and video on a teacher terminal according to one embodiment of the present disclosure;

FIG. 5 is a schematic diagram of a page displayed on a first terminal device according to one embodiment of the present disclosure;

FIG. 6 is a flowchart of a synchronous display and playing of whiteboard and video on a student terminal according to one embodiment of the present disclosure;

FIG. 7 is a flowchart of a decoding part according to a solution for synchronous display and playing according to one embodiment of the present disclosure;

FIG. 8 is a flowchart of a rendering and playing part according to a solution for synchronous display and playing according to one embodiment of the present disclosure;

FIG. 9 is a schematic structural diagram of a whiteboard and video synchronization device according to one embodiment of the present disclosure; and

FIG. 10 is a schematic structural diagram of another whiteboard and video synchronization device according to one embodiment of the present disclosure.

## DETAILED DESCRIPTION

To make the objective, technical solutions, and advantages of the present disclosure clearer, the present disclosure will be made in detail hereinafter with reference to the accompanying drawings. Apparently, the described embodiments are only a part, but not all, of the embodiments of the present disclosure. Various other embodiments obtained by a person of ordinary skill in the art based on the embodiments of the present disclosure without creative efforts still fall within the protection scope of the present disclosure.

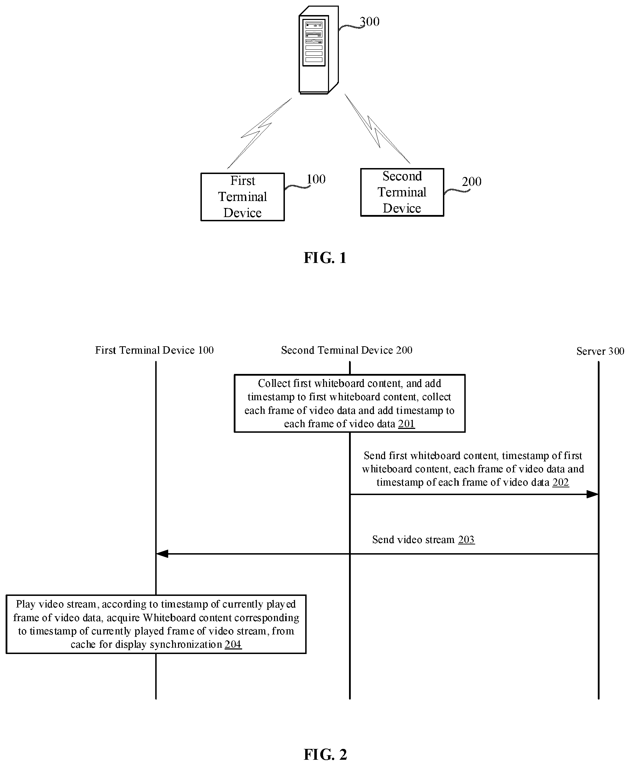

FIG. 1 illustrates an example system architecture according to one embodiment of the present disclosure. The system architecture may include a first terminal device 100, a second terminal device 200, and a server 300. The first terminal device 100 and the second terminal device 200 respectively communicate with the server 300.

In a specific implementation, the first terminal device 100 may be located at a student side, that is, a device for a student to view a teacher's lecture. The first terminal device 100 may include: a whiteboard module, a chat module, and a streaming module. The whiteboard module is configured to display the course content of a lecture from a remote teacher side, the chat module is configured to display the interactive chat content between the students and a remote teacher, and the streaming module is configured to play the video content of a remote teacher's early recording or real-time online live stream. The first terminal device 100 may communicate with the server through a "long" connection, and receive the whiteboard content pushed by the server in real time; or pull an on-demand or live stream from the server 300 through a "short" connection or a "long" connection.

The second terminal device 200 may be located at a teacher side, that is, a device used by a teacher for teaching, and may include a whiteboard module, a chat module, and a stream-pushing module. The whiteboard module is configured to display the course content of a teacher's current lecture; the chat module is configured to display the current interactive chat content between a teacher and the remote students; and the stream-pushing module is configured to push a teacher's instant real-time online live streaming video content.

The server 300 may be a video storage server for storing video streams and whiteboard contents sent by the second terminal device 200.

Based on the foregoing description, FIG. 2 illustrates an example flowchart of whiteboard and video synchronization according to one embodiment of the present disclosure, which may be executed on a device for whiteboard and video synchronization. The flowchart of the whiteboard and video synchronization will be described hereinafter by means of three-way interaction in conjunction with the system architecture shown in FIG. 1.

Step 201: The second terminal device 200 collects a first whiteboard content, adds a timestamp to the collected first whiteboard content, collects each frame of video data, and adds a timestamp to the collected each frame of video data.

When a teacher gives a lecture, the second terminal device 200 collects a first whiteboard content and the video stream of the teacher's lecture. Each time when a first whiteboard content is generated during the lecture, the generated each first whiteboard content and the corresponding timestamp are sent to the server 300 together for storage. The timestamp may be a UTC timestamp. In other words, a synchronization reference is defined on the second terminal device side, and the embodiments of the present disclosure use UTC timestamp as the reference. When collecting a frame of video image each time, the second terminal device 200 writes the current UTC timestamp of each collection together with the frame of video image into an SEI frame of the H264 video stream. In this way, the synchronous collection of the video stream image and the whiteboard content may be guaranteed right from the beginning.

Step 202: The second terminal device 200 sends the first whiteboard content, the timestamp of the first whiteboard content, each frame of video data, and the timestamp of each frame of video data to the server 300.

After collecting the first whiteboard content and the video data, the second terminal device 200 may send the collected first whiteboard content and video data to the server 300 for storage, to allow the first terminal device 100 to pull the stream.

Step 203: The server 300 sends the video stream to the first terminal device 100.

When a student needs to study the lecture of the teacher, a first terminal device 100 may be used to request the video stream from the server 300, that is, to pull the stream from the server 300. The server 300 may send the video stream to the first terminal device 100 based on the request of the first terminal device 100.

Step 204: The first terminal device 100 plays the video stream, and, according to the timestamp of the currently played frame of the video stream, acquires the whiteboard content corresponding to the timestamp of the currently played frame of the video stream, from the cache for synchronization display.

Before acquiring the video stream sent by the server 300, the first terminal device 100 also needs to acquire the whiteboard content sent by the server 300, and cache the acquired whiteboard content. Here, the whiteboard content is provided with a timestamp.

After acquiring the video stream, the first terminal device 100 may play the video stream. At the same time, to achieve a synchronous display, the first terminal device may also acquire, from the cache, the whiteboard content corresponding to the timestamp of the currently played frame of the video stream according to the timestamp of the currently played frame of the video stream. Specifically, when playing the video stream, the first terminal device 100 rounds down the current playing time to acquire a first timepoint, and searches for the timestamp of the current frame in cached queues according to the first timepoint. According to the timestamp of the current frame, the whiteboard content corresponding to the timestamp of the current frame is acquired from the cache for synchronous display.

Optionally, since the timestamp of the current frame needs to be searched in the cached queues when playing the video stream, before playing the video stream, the first terminal device 100 may first decode the acquired video stream to determine the playing time of each frame of video data, then round down the playing time of each frame of video data to determine a first timepoint of each frame of video data, and put the timestamp of each frame of video data into a cached queue by using the first timepoint as an index. Accordingly, after acquiring the video stream, the first terminal device 100 may first decode the acquired timestamps.

Since the playing time of the video stream and the timestamps used in collecting the video stream are different concepts, the two need to be converted. By way of setting cached queues, the timestamp of each frame of video data is now cached, and the correspondence between the timestamps used in collecting the video stream and the playing time is established. For example, the playing time at 10.00 second, 10.01 second, 10.02 second, and 10.03 second respectively correspond to one frame of video data. At this moment, the playing time of these frames of video data is rounded down, to obtain 10.00 second. Create a cached queue by using the playing time of 10.00 second as the index, and place the timestamps corresponding to frames of video data at 10.00 second, 10.01 second, 10.02 second and 10.03 second into the cached queue with 10.00 second as the index. Through this technical approach, the timestamp for the time of each frame of the acquired video stream may be cached.

By the time the first terminal device 100 plays the video stream, when the video stream is played to 10.01 second, the first terminal device 100 rounds down the 10.01 second to obtain 10.00 second. Accordingly, the cached queue with 10.00 second as the index may be searched, so that the timestamp corresponding to the video data at 10.01 second may be quickly located. After obtaining the timestamp corresponding to the frame of video data at 10.01 second, the first terminal device 100 may search, from the cache, the whiteboard content associated with the timestamp corresponding to the frame of video data at 10.01 second for synchronous display. For example, if the timestamp corresponding to the frame of video data at 10.01 second is 8:03 in 20XX, the whiteboard content corresponding to 8:03 in 20XX may be searched from the cache. Because the second terminal device 200 uses the same timestamp to collect the whiteboard content and the video data, the corresponding whiteboard content may be displayed synchronously when the video stream is played, and thus a slow refreshing of the whiteboard content will not occur.

Optionally, in order to further synchronize the whiteboard content and the video image, when the whiteboard content corresponding to the timestamp of the currently played frame of the video stream is acquired from the cache for synchronous display, it may be first determined whether the difference between the timestamp of the currently played frame of the video stream and the timestamp of the cached whiteboard content is less than a first threshold. If the difference is less the first threshold, the whiteboard content is synchronously displayed. Here, the first threshold may be defined based on the experience, for instance, may be set to 500 ms. That is, when the difference between the two timestamps is within 500 ms, the whiteboard content may be displayed synchronously.

To make the technical solutions provided by the present disclosure clearer, the flowchart of the whiteboard and video synchronization will be described hereinafter in conjunction with specific implementation scenarios.

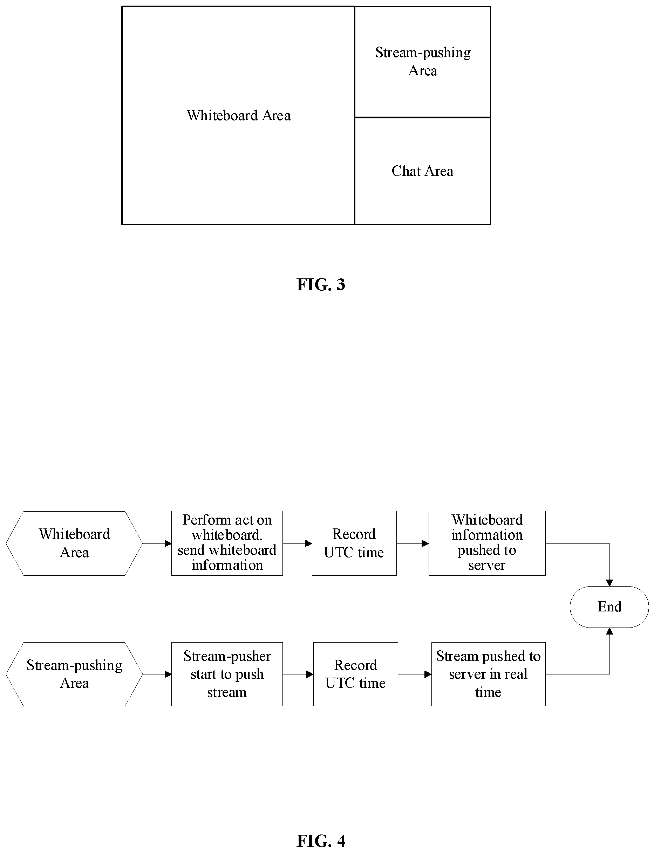

In the embodiments of the present disclosure, FIG. 3 illustrates an example page displayed on a teacher terminal, i.e., the second terminal device 200. The displayed page includes three display areas such as a whiteboard area, a stream-pushing area, and a chat area. The whiteboard area provides an "electronic blackboard" for a teacher to give a lecture, and the teacher may write and edit course materials in the area. The stream-pushing area provides a web stream-pusher, which may be a Flash stream-pusher or a HyperText Markup Language (HTML) 5 stream-pusher. The stream-pusher at least includes a voice collection device (such as a microphone), a video capture device (such as a camera). Through these devices, streaming media format data may be collected. Through forwarding by a relay terminal (e.g., delivery by a content delivery network (CDN) node), the collected streaming media format data may be pushed to viewer terminals for watching. The chat area provides an instant messaging (IM) chat room, where interactive chats between the teacher and the students may be noticed.

FIG. 4 illustrates an example flowchart of synchronous display and playing of the whiteboard and video on a teacher terminal, and the specific steps may be as follows:

First, perform an act on the whiteboard (e.g., draw a rectangle), save the whiteboard data B1 and the current UTC time T1 after the act, and transmit B1 and T1 through a signaling channel (such as HyperText Transfer Protocol (HTTP), WebSocket (TCP-based full-duplex communication protocol), etc.) to a backend server. The backend server then saves the data S1 and delivers and pushes the data S1 to the student terminals.

Next, the stream-pusher collects audio and video data in real time and performs audio and video encoding on the collected audio and video data. For example, the audio and video data are respectively encoded into H264 or AAC (Advanced Audio Coding) format by using encoding tools such as FFMPEG (Fast Forward Mpeg), X264, FAAC, hard coding, etc.

In one embodiment, the captured video data is encoded into video data in H.264 format by using an H.264 video encoding method, and the collected audio data is encoded into audio data in AAC format by using an AAC audio encoding method. The stream-pusher writes the current UTC time into an SEI frame of the H.264 video data in real time. Finally, the stream-pusher pushes the audio data and video data to the server in real time, which are then passively pushed (triggered by a student's stream-pulling action) to the student terminals for watching.

In this way, it may be ensured that the UTC timestamp of the whiteboard content and the UTC timestamp of the video stream be synchronized.

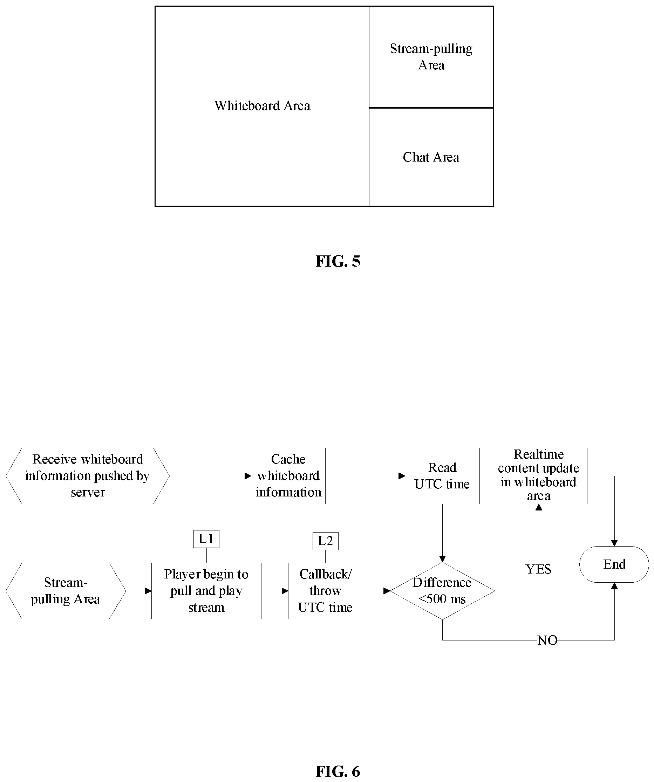

FIG. 5 illustrates an example page displayed on a student terminal, i.e., the first terminal device 100. The displayed page includes three display areas, such as a whiteboard area, a stream-pulling area, and a chat area. The whiteboard area provides an "electronic blackboard" for displaying a teacher's lecture. The teacher's writing, drawing and editing of the course materials may be shown in this area. The stream-pulling area provides a web player, which may be a Flash player or an HTML5 player. The web player should at least be able to parse and play an on-demand or live stream under the protocols such as HLS (HTTP Live Streaming), HDL (HTTP-FLV, protocol for HTTP delivery of streaming resources) by parsing live stream data of a teacher and rendering it to the students for watching. The chat area provides an IM chat room where the interactive chats between the teacher and students may be noticed.

In the embodiments of the present disclosure, the solution for synchronous display reflected on a student terminal mainly includes two part: a player and a whiteboard display, where the player is mainly divided into two parts: decoding, rendering and playing.

FIG. 6 illustrates an example flowchart of synchronous display and playing of the whiteboard and video on a student terminal, and the specific steps are as follows:

First, through a signaling channel (such as WebSocket, etc.), the whiteboard data B2 and the UTC time T2 pushed by the backend server are received, and the B2 and T2 are temporarily saved to a browser through a caching mechanism (such as a cookie, a session, a WebStorage, etc.).

Next, the player pulls an on-demand or live stream from the teacher terminal in real time. In one embodiment, an SEI frame of the H.264 video data is parsed in real time according to the solution for synchronous display to obtain UTC time T3, and the difference between T2 and T3 is checked (e.g., whether the difference between the two is within 500 ms) to determine whether to display the whiteboard content data B2 in the whiteboard area.

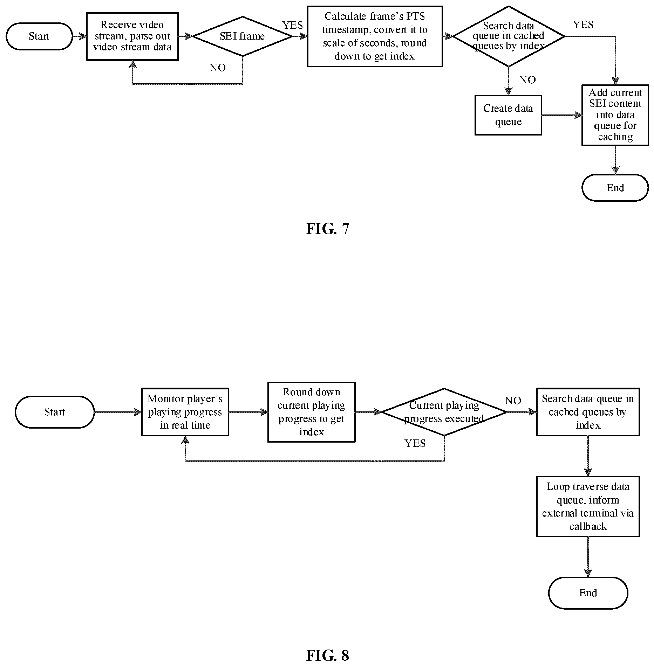

FIG. 7 illustrates an example flowchart of a player decoding part according to the solution for synchronous display, which mainly describes the principle of caching the UTC time of the teacher terminal within the player of a student terminal, and the specific steps are as follows:

First, the player pulls an on-demand or live stream of the teacher from the server through a signaling channel (such as HTTP, Web Socket, etc.), and parses the video data of the streaming media in real time to obtain an SEI frame of the H.264 video data.

Next, a cached queue CA1 is initialized, and the PTS timestamp P1 (presentation timestamp) of the SEI frame is parsed and converted into ST1 (time at a scale of seconds). In one embodiment, ST1 = Math.floor((P1 * 90) / 90000).

Finally, the corresponding data queue is searched in the cached queues DA1 by using ST1 as an index. If the data queue does not exist, a data queue DA1 (CA1 = [DA1]) is initialized and allocated, and the customized content corresponding to ST1 is ultimately added into the data queue DA1 (DA1 = [ST1]) (in one embodiment, only the content for UTC time is currently customized).

It should be noted that time at a scale of seconds involved in the above steps may be explained by the following general formula (1):

$$\text{``ST''} = [(T*90)/90000] \qquad (1)$$

where ST is time at a scale of seconds and T is the timestamp.

The cached queues involved in the above steps may be explained by the following general formula (2):

$$CA = [DA1, DA2, ..., DAN] \qquad (2)$$

where CA are cached queues and DA is a data queue.

A data queue in the above cached queues may be explained by the following general formula (3):

$$DA = [ST1, ST2, ..., STN] \qquad (3)$$

where DA is a data queue, ST is the customized data, which is time at a scale of seconds.

The customized data (which may be freely extended) in the above data queue may be explained by the following general formula (4):

$$ST = [\text{``time''}:T] \qquad (4)$$

where ST is the customized data, that is, time at a scale of seconds, and T is the timestamp.

The above ST is a customized data, where the customized data is a format agreed by both a stream-pushing terminal and a stream-pulling terminal. The agreed format includes at least the UTC timestamp information.

FIG. 8 illustrates an example flowchart of a rendering and playing part of a player according to the solution for synchronous display. The process mainly describes the synchronization principle for using the UTC time of a teacher terminal to callback and inform a student terminal to display whiteboard content within the player of the student terminal. The specific steps are as follows:

First, the player internally monitors in real time (in one embodiment, by monitoring the video playing progress) the current playing progress or time, and rounds down the time to get CT1. In one embodiment, CT1 = Math.floor(video.currentTime). If CT1 has not been processed yet, the corresponding data queue CDA1 is searched in the cached queues CA1 by using CT1 as an index. If the data queue CDA1 is not empty, loop traverses the queue, and inform the webpage terminal the data in the queue by using the interface callback. The webpage terminal obtains the customized content CC1.

Next, the webpage terminal retrieves the whiteboard data (such as B2 in the process shown in FIG. 6) and the UTC time (such as T2 in the process shown in FIG. 6) from the cache of the browser, and retrieves the UTC time CC1T1 from the customized content CC1. Finally, B2 is displayed in the whiteboard area after comparing the difference between CC1T1 and T2.

According to the foregoing embodiments, the first terminal device 100 acquires a video stream sent by the server, where each frame of video data in the video stream is provided with a timestamp. The video stream is sent to the server by the second terminal device 200 after the second terminal device collects each frame of video data and adds a timestamp to each frame of video data. Next, the first terminal device plays the video stream, and, according to the timestamp of the currently played frame of the video stream, the first terminal device acquires, from the cache, the whiteboard content corresponding to the timestamp of the currently played frame of the video stream. Since the timestamp is used for synchronization purpose, during the display, the whiteboard content and the current frame of video data that have the same timestamp are to be displayed synchronously. This may solve the problem of the network instability-caused dyssynchronization between the whiteboard content and video data in the existing technologies.

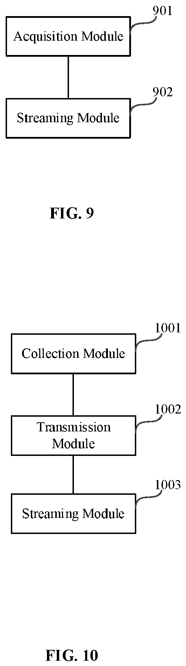

Based on the same technical concept, FIG. 9 illustrates an example device for whiteboard and video synchronization according to one embodiment of the present disclosure. The device may implement the steps performed by the first terminal device 100.

As shown in FIG. 9, the device specifically includes:

an acquisition module 901 that is configured to acquire a video stream sent by the server, where each frame of video data is provided with a timestamp, and the video stream is sent to the server by the second terminal device after the second terminal device collects each frame of video data and adds a timestamp to each frame of video data; and

a streaming module 902 that is configured to play the video stream, and according to the timestamp of a currently played frame of the video stream, acquire, the whiteboard content corresponding to the timestamp of the currently played frame of the video stream, from a cache for synchronous display.

Optionally, the acquisition module 901 is further configured to:
before acquiring the video stream sent by the server, acquire the whiteboard content sent by the server, and cache the whiteboard content, where the whiteboard content includes a timestamp, and is a first whiteboard content that is collected by the second terminal device and is added with the timestamp and sent to the server by the second terminal device.

Optionally, the streaming module 902 is specifically configured to:

play the video stream, round down current playing time of the currently played frame of the video stream to determine a first timepoint, and search for the timestamp of the currently played frame in a cached queue according to the first timepoint; and

according to the timestamp of the currently played frame, acquire, the whiteboard content corresponding to the timestamp of the currently played frame, from the cache for synchronous display.

Optionally, the streaming module 902 is further configured to:

decode the video stream and determine playing time of each frame of video data before playing the video stream; and round down the playing time of each frame of video data to determine a second timepoint of each frame of video data, and use the second timepoint as an index to place the timestamp of each frame of video data into the cached queue.

Optionally, the streaming module 902 is further configured to:

determine whether a difference between the timestamp of the currently played frame of the video stream and a timestamp of the cached whiteboard content is less than a first threshold; and
if the difference is less than the first threshold, synchronously display the whiteboard content with the timestamp difference less than the first threshold.

Optionally, a timestamp described above is a UTC timestamp.
Based on the same technical concept, FIG. 10 illustrates another example device for whiteboard and video synchronization according to one embodiment of the present disclosure. The device may implement the steps performed by the first terminal device 200.
As shown in FIG. 10, the device specifically includes:

a collection module 1001 that is configured to collect a first whiteboard content and add a timestamp to the first whiteboard content, and collect each frame of video data and add a timestamp to each frame of video data; and
a transmission module 1002 that is configured to send the first whiteboard content, the timestamp of the first whiteboard content, each frame of video data, and the timestamp of each frame of video data to a server.

Optionally, the apparatus further includes a streaming module 1003; and
the streaming module 1003 is specifically configured to:
after sending the first whiteboard content, the timestamp of the first whiteboard content, each frame of video data, and the timestamp of each frame of video data to the server, play each frame of video data, and determine a first whiteboard content synchronously displayed with each frame of video data according to the timestamp of each frame of video data and the timestamp of the first whiteboard content.
Optionally, a timestamp described above is a UTC timestamp.
Based on the same technical concept, embodiments of the present disclosure further provide a computing device, which includes:

a memory for storing programs and instructions; and
a processor that is configured to call the programs and instructions stored in the memory and implement the foregoing whiteboard and video synchronization methods based on the acquired programs and instructions.

Based on the same technical concept, embodiments of the present disclosure further provide a computer-readable storage medium comprising computer-readable instructions that, when read and executed by a computer, cause the computer to implement the foregoing whiteboard and video synchronization methods.

The present disclosure has been described with reference to flowcharts and/or block diagrams of methods, apparatus (system), and computer program products consistent with the embodiments of the present disclosure. It will be understood that each flow and/or block of the flowcharts and/or block diagrams and the combinations thereof may be implemented through computer programs and instructions. These computer programs and instructions may be provided to a processor of a general purpose computer, special purpose computer, embedded processor, or other programmable data processing devices to create a machine, so that an apparatus for implementing the functions specified in one or more flows of the flowcharts and/or one or more blocks of the block diagrams may be created through the instructions implemented by a processor of a computer or other programmable data processing devices.

The computer programs and instructions may also be stored in a computer-readable memory that directs a computer or other programmable data processing devices to operate in a specified manner, so that the instructions stored in the computer-readable memory may create a product comprising an instruction device. The instruction device implements the functions specified in one or more flows of the flowcharts and/or one or more blocks of the block diagrams.

These computer programs and instructions may be also loaded onto a computer or other programmable data processing devices, to allow a series of operational steps to be implemented on the computer or the other programmable devices to produce computer-implemented processing. Accordingly, instructions implemented on the computer or the other programmable devices provide specific steps for implementing the functions specified by one or more flows of the flowcharts and/or one or more blocks of the block diagrams.

Although the present disclosure has been described with reference to the preferred embodiments, a person skilled in the art may modify or make other changes to these embodiments upon an understanding of its creative concept. Accordingly, the appended claims are intended to include the preferred embodiments and all other modifications and variations that fall with the scope of the present disclosure.

It is apparent that those skilled in the art may make various modifications and variations to the present disclosure without departing from the spirit and scope of the present disclosure. Accordingly, if these modifications and variations fall with the scope of the appended claims and the equivalent techniques, it is intended that the present disclosure still cover these modifications and modifications of the present disclosure.

**Claims**

1. A method for whiteboard and video synchronization, comprising:

   acquiring, by a first terminal device, a video stream sent by a server, wherein each frame of video data in the video stream has a timestamp, and the video stream is sent to the server by a second terminal device after the second terminal device collects each frame of video data and adds a timestamp to each frame of video data; and
   playing the video stream by the first terminal device, and according to a timestamp of a currently played frame of the video stream, acquiring, by the first terminal device, a whiteboard content corresponding to the timestamp of the currently played frame of the video stream, from a cache for synchronous display.

2. The method according to claim 1, wherein, before acquiring, by the first terminal device, the video stream sent by the server, the method further includes:
   acquiring, by the first terminal device, the whiteboard content sent by the server, and caching, by the first terminal device, the whiteboard content, wherein the whiteboard content includes a timestamp, and is a first whiteboard content that is collected by the second terminal device and is added with the timestamp and sent to the server by the second terminal device.

3. The method according to claim 1, wherein playing the video stream by the first terminal device, and according to the timestamp of the currently played frame of the video stream, acquiring, by the first terminal device, the whiteboard content corresponding to the timestamp of the currently played frame of the video stream, from the cache for synchronous display further includes:

   playing, by the first terminal device, the video stream, rounding down current playing time of the currently played frame of the video stream to determine a first timepoint, and searching for the timestamp of the currently played frame in a cached queue according to the first timepoint; and
   according to the timestamp of the currently played frame, acquiring, by the first terminal device, the whiteboard content corresponding to the timestamp of the currently played frame, from the cache for synchronous display.

4. The method according to claim 3, before playing the video stream by the first terminal device, the method further includes:

decoding, by the first terminal device, the video stream and determining playing time of each frame of video data; and
rounding down, by the first terminal device, the playing time of each frame of video data to determine a second timepoint of each frame of video data, and using the second timepoint as an index to place the timestamp of each frame of video data in the cached queue.

5. The method according to claim 1, wherein acquiring, by the first terminal device according to the timestamp of the currently played frame of the video stream, the whiteboard content corresponding to the timestamp of the currently played frame of the video stream, from the cache for synchronous display further includes:

determining, by the first terminal device, whether a difference between the timestamp of the currently played frame of the video stream and a timestamp of the cached whiteboard content is less than a first threshold; and
if the difference is less than the first threshold, synchronously displaying, by the first terminal device, the whiteboard content with the timestamp difference less than the first threshold.

6. The method according to any one of claims 1-5, wherein a timestamp is a UTC timestamp.

7. A method for whiteboard and video synchronization, comprising:

collecting, by a second terminal device, a first whiteboard content and adding a timestamp to the first whiteboard content;
collecting, by the second terminal device, each frame of video data and adding a timestamp to each frame of video data; and
sending, by the second terminal device, the first whiteboard content, the timestamp of the first whiteboard content, each frame of video data, and the timestamp of each frame of video data to a server.

8. The method according to claim 7, wherein, after sending, by the second terminal device, the first whiteboard content, the timestamp of the first whiteboard content, each frame of video data, and the timestamp of each frame of video data to the server, the method further includes:
playing, by the second terminal device, each frame of video data, and determining the first whiteboard content synchronously displayed with each frame of video data according to the timestamp of each frame of video data and the timestamp of the first whiteboard content.

9. The method according to claim 7 or 8, wherein a timestamp is a UTC timestamp.

10. An apparatus for whiteboard and video synchronization, comprising:

an acquisition module that is configured to acquire a video stream sent by a server, wherein each frame of video data in the video stream has a timestamp, and the video stream is sent to the server by a second terminal device after the second terminal device collects each frame of video data and adds a timestamp to each frame of video data; and
a streaming module that is configured to play the video stream, and according to a timestamp of a currently played frame of the video stream, acquire, a whiteboard content corresponding to the timestamp of the currently played frame of the video stream, from a cache for synchronous display.

11. The apparatus according to claim 10, wherein the acquisition module is further configured to:
before acquiring the video stream sent by the server, acquire the whiteboard content sent by the server, and cache the whiteboard content, wherein the whiteboard content includes a timestamp, and is a first whiteboard content that is collected by the second terminal device and is added with the timestamp and sent to the server by the second terminal device.

12. The apparatus according to claim 10, wherein the streaming module is further configured to:

play the video stream, round down current playing time of the currently played frame of the video stream to determine a first timepoint, and search for the timestamp of the currently played frame in a cached queue according to the first timepoint; and
according to the timestamp of the currently played frame, acquire, the whiteboard content corresponding to the timestamp of the currently played frame, from the cache for synchronous display.

13. The apparatus according to claim 12, wherein the streaming module is further configured to:

decode the video stream and determine playing time of each frame of video data before playing the video stream; and
round down the playing time of each frame of video data to determine a second timepoint of each frame of video data, and use the second timepoint as an index to place the timestamp of each frame of video data into the cached queue.

14. The apparatus according to claim 10, wherein the streaming module is further configured to:

determine whether a difference between the timestamp of the currently played frame of the video stream and a timestamp of the cached whiteboard content is less than a first threshold; and
if the difference is less than the first threshold, synchronously display the whiteboard content with the timestamp difference less than the first threshold.

15. The apparatus according to any one of claims 10-14, wherein a timestamp is a UTC timestamp.

16. A apparatus for whiteboard and video synchronization, comprising:

a collection module that is configured to collect a first whiteboard content and add a timestamp to the first whiteboard content, and collect each frame of video data and add a timestamp to each frame of video data; and
a transmission module that is configured to send the first whiteboard content, the timestamp of the first whiteboard content, each frame of video data, and the timestamp of each frame of video data to a server.

17. The apparatus according to claim 16, further comprising a streaming module that is configured to:
after sending the first whiteboard content, the timestamp of the first whiteboard content, each frame of video data, and the timestamp of each frame of video data to the server, play each frame of video data, and determine a first whiteboard content synchronously displayed with each frame of video data according to the timestamp of each frame of video data and the timestamp of the first whiteboard content.

18. The apparatus according to claim 16 or 17, wherein a timestamp is a UTC timestamp.

19. A computing device, comprising:

a memory for storing programs and instructions; and
a processor that is configured to call the programs and instructions stored in the memory and implement the method according to any one of claims 1-9 based on the acquired programs and instructions.

20. A computer-readable storage medium, comprising computer-readable instructions that, when read and executed by a computer, cause the computer to implement the method according to any one of claims 1-9.

**FIG. 1**

First Terminal Device 100 | Second Terminal Device 200 | Server 300

Collect first whiteboard content, and add timestamp to first whiteboard content, collect each frame of video data and add timestamp to each frame of video data 201

Send first whiteboard content, timestamp of first whiteboard content, each frame of video data and timestamp of each frame of video data 202

Send video stream 203

Play video stream, according to timestamp of currently played frame of video data, acquire Whiteboard content corresponding to timestamp of currently played frame of video stream, from cache for display synchronization 204

**FIG. 2**

| | |
|---|---|
| Whiteboard Area | Stream-pushing Area |
| | Chat Area |

**FIG. 3**

```
┌──────────────┐   ┌──────────────┐   ┌──────────────┐   ┌──────────────┐
│  Whiteboard  │──▶│ Perform act  │──▶│   Record     │──▶│  Whiteboard  │
│    Area      │   │ on whiteboard│   │   UTC time   │   │ information  │
│              │   │ send whiteboard│ │              │   │  pushed to   │
│              │   │ information  │   │              │   │   server     │
└──────────────┘   └──────────────┘   └──────────────┘   └──────────────┘
                                                                   │
                                                                   ▼
                                                            ┌──────────┐
                                                            │   End    │
                                                            └──────────┘
                                                                   ▲
┌──────────────┐   ┌──────────────┐   ┌──────────────┐   ┌──────────────┐
│Stream-pushing│──▶│Stream-pusher │──▶│   Record     │──▶│Stream pushed │
│    Area      │   │ start to push│   │   UTC time   │   │ to server in │
│              │   │   stream     │   │              │   │  real time   │
└──────────────┘   └──────────────┘   └──────────────┘   └──────────────┘
```

**FIG. 4**

| Whiteboard Area | Stream-pulling Area |
| | Chat Area |

**FIG. 5**

Receive whiteboard information pushed by server → Cache whiteboard information → Read UTC time → Realtime content update in whiteboard area → End

Stream-pulling Area → L1 → Player begin to pull and play stream → L2 → Callback/throw UTC time → Difference <500 ms

Difference <500 ms → YES → Realtime content update in whiteboard area

Difference <500 ms → NO → End

**FIG. 6**

Start → Receive video stream, parse out video stream data → SEI frame —NO→ (loops back to Receive video stream)

SEI frame —YES→ Calculate frame's PTS timestamp, convert it to scale of seconds, round down to get index → Search data queue in cached queues by index

Search data queue in cached queues by index —NO→ Create data queue → Add current SEI content into data queue for caching

Search data queue in cached queues by index —YES→ Add current SEI content into data queue for caching → End

**FIG. 7**

Start → Monitor player's playing progress in real time → Round down current playing progress to get index → Current playing progress executed

Current playing progress executed —YES→ (loops back to Monitor player's playing progress in real time)

Current playing progress executed —NO→ Search data queue in cached queues by index → Loop traverse data queue, inform external terminal via callback → End

**FIG. 8**

16

Acquisition Module — 901

Streaming Module — 902

**FIG. 9**

Collection Module — 1001

Transmission Module — 1002

Streaming Module — 1003

**FIG. 10**

| | INTERNATIONAL SEARCH REPORT | International application No. |
|---|---|---|
| | | **PCT/CN2018/119596** |

**A.  CLASSIFICATION OF SUBJECT MATTER**

H04N 21/43(2011.01)i

According to International Patent Classification (IPC) or to both national classification and IPC

**B.  FIELDS SEARCHED**

Minimum documentation searched (classification system followed by classification symbols)

H04N21/-; G06F17/-

Documentation searched other than minimum documentation to the extent that such documents are included in the fields searched

Electronic data base consulted during the international search (name of data base and, where practicable, search terms used)

USTXT; EPTXT; CNTXT; CNABS; WOTXT; VEN; CNKI: 视频, 时间, 时间戳, 采集, 服务器, 白板, 同步, 显示, 视频流, 帧, video, time, timestamp, collect, server, white board, synchronize, display, video stream, frame

**C.  DOCUMENTS CONSIDERED TO BE RELEVANT**

| Category* | Citation of document, with indication, where appropriate, of the relevant passages | Relevant to claim No. |
|---|---|---|
| X | CN 106326343 A (CHONGQING SHARP CHANG SCIENCE AND TECHNOLOGY CO., LTD.) 11 January 2017 (2017-01-11) description, paragraphs 16-21, and figures 1-2 | 1-20 |
| A | CN 105898395 A (LESHI ZHIXIN ELECTRONIC SCIENCE AND TECHNOLOGY (TIANJIN) CO., LTD.) 24 August 2016 (2016-08-24) entire document | 1-20 |
| A | CN 104050840 A (LABWE INC.) 17 September 2014 (2014-09-17) entire document | 1-20 |
| A | WO 2016029116 A1 (CNS) 25 February 2016 (2016-02-25) entire document | 1-20 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **29 July 2019** | **20 August 2019** |

| Name and mailing address of the ISA/CN | Authorized officer |
|---|---|
| **State Intellectual Property Office of the P. R. China** **No. 6, Xitucheng Road, Jimenqiao Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2018/119596**

| Patent document cited in search report | | | Publication date (day/month/year) | Patent family member(s) | | | Publication date (day/month/year) |
|---|---|---|---|---|---|---|---|
| CN | 106326343 | A | 11 January 2017 | None | | | |
| CN | 105898395 | A | 24 August 2016 | None | | | |
| CN | 104050840 | A | 17 September 2014 | None | | | |
| WO | 2016029116 | A1 | 25 February 2016 | US | 2017061092 | A1 | 02 March 2017 |

Form PCT/ISA/210 (patent family annex) (January 2015)